# EUROPEAN PATENT SPECIFICATION

(11) **EP 2 114 717 B1**
(45) Date of publication and mention of the grant of the patent: **22.02.2012**
(21) Application number: 08705334.4
(22) Date of filing: 22.01.2008
(51) Int. Cl.: B60K 31/00

(54) **CRUISE CONTROL SYSTEM AND METHOD FOR CONTROLLING THE TARGET SPEED THEREOF**
FAHRGESCHWINDIGKEITSREGELUNGSSYSTEM UND VERFAHREN ZUR STEUERUNG VON DESSEN ZIELGESCHWINDIGKEIT
SYSTÈME DE RÉGULATION DE VITESSE ET PROCÉDÉ DE RÉGULATION DE VITESSE CIBLE ASSOCIÉ

(30) Priority: 30.01.2007 SE 0700205
(43) Date of publication of application: 11.11.2009
(73) Proprietor: Scania CV AB (PUBL), 151 87 Södertälje (SE)
(72) Inventor: RICKMAN, Johnny, S-152 71 Södertälje (SE); WINGREN, Anna, S-151 38 Södertälje (SE); WICKSTRÖM, Samuel, S-151 71 Södertälje (SE)
(86) International application number: PCT/SE2008/050062
(87) International publication number: WO 2008/094111

(56) References cited:
- EP-A1- 0 046 019
- EP-A2- 1 013 521
- WO-A1-03/041987
- US-A- 4 211 193
- US-A- 4 467 428
- US-A- 5 019 986
- US-B1- 6 374 173

## Description

### FIELD OF THE INVENTION AND PRIOR ART

The present invention relates to a method for controlling the target speed of a avise control system, and to a cruise control system for a motor vehicle according to the preamble of claims 1 and 10 respectively. Furthermore, the invention relates to a computer program comprising computer program code for implementing a method according to the invention, a computer program product comprising a data storage medium readable by an electronic control unit and having said computer program stored thereon, and an electronic control unit.

### BACKGROUND ART

Motor vehicles, such as cars, lorries, towing vehicles and buses, are often provided with a so-called cruise control system, also denominated speed control system, for automatically controlling the vehicle speed. Such a control system comprises means, such as a speed sensor, for monitoring the actual vehicle speed. The cruise control system compares the actual vehicle speed with a set target speed. The target speed may for instance be entered into the cruise control system as the prevailing actual vehicle speed when a set switch is actuated by the driver. The cruise control system generates an error signal by comparing the actual vehicle speed with the target speed. The error signal is then for instance used to control an actuator coupled to the fuel pump or to the vehicle throttle in order to change the engine speed until the error signal is substantially zero, i.e. until the actual vehicle speed is equal to the target speed.

A conventional cruise control system has a disadvantageous effect when a vehicle descends a downhill slope, particularly if the downhill slope is followed by an uphill slope. When a vehicle under the control of such a cruise control system descends a steep downhill slope, the vehicle will accelerate under the effect of gravity to a speed above the target speed. During this process, the cruise control system will reduce the engine power to a minimum. If the downhill slope is followed by an uphill slope, the vehicle speed will fall as the vehicle begins to ascend the uphill slope, but the cruise control system will not begin to increase the engine power from its minimum setting until the actual speed of the vehicle has fallen to the target speed. Therefore, a large amount of the kinetic energy gained by the vehicle in descending the downhill slope will not be efficiently utilized. This is particularly disadvantageous when the vehicle is a heavy vehicle.

In order to overcome the above-mentioned disadvantage, cruise control systems have been proposed and developed, which allow the target speed to be increased at the end of a downhill slope and to be maintained at an increased level for a certain period of time thereafter so as to thereby allow the vehicle to enter a following uphill slope at a speed above the target speed set by the driver. Hereby, the vehicle will take better advantage of the kinetic energy gained when descending the previous downhill slope. Such a cruise control system is for instance known from US 4 467 428 A.

Heavy motor vehicles, such as lorries, towing vehicles and buses, are often provided with brake control means which can be enabled by the driver of the vehicle in order to automatically control one or several brakes of the vehicle so as to restrict the speed of the vehicle when the vehicle descends a downhill slope. A target speed for the brake control means is settable by the driver. In this description and the subsequent claims, this target speed is referred to as "brake reference speed". In dependence on information as to the set brake reference speed and the actual speed of the vehicle, the brake control means will endeavour to restrict the speed of the vehicle to the brake reference speed. Such a brake control means is normally adapted to control one or several auxiliary brakes of the vehicle. An auxiliary brake is a supplement to the ordinary wheel brakes of the vehicle and is configured to produce a retarding torque for decreasing the rotational speed of the engine crankshaft. An auxiliary brake may for instance be an engine brake, an exhaust brake, an electromagnetic retarder or a hydraulic retarder. The auxiliary brakes are with advantage used for constant speed keeping purposes in downhill slopes and for moderate decelerations, whereas the vehicle's ordinary wheel brakes are mainly used for powerful and sudden braking operations. With the use of auxiliary brakes, the ordinary wheel brakes, which normally constitute friction brakes of disc brake or drum brake type, are prevented from overheating with the associated risk of brake failure and the wear thereof is reduced.

US 5 634 446 A discloses a cruise control system provided with brake control means which controls auxiliary brakes of a vehicle in order to restrict the speed of the vehicle to a given brake reference speed when the vehicle accelerates under the effect of gravity in a downhill slope to a speed above the ordinary target speed set for the cruise control system.

EP 1 013 521 A discloses a method for controlling the target speed according to the preamble of claim 1.

It discloses further a cruise control system according to the preamble of claim 10.

### DISCLOSURE OF THE INVENTION

The object of the present invention is to propose a new and advantageous manner of regulating the target speed of a cruise control system of a motor vehicle, wherein the cruise control system is of the type comprising:
- engine control means for automatically controlling the engine of the vehicle so as to endeavour to keep the speed of the vehicle essentially equal to a target speed, and
- brake control means for automatically controlling one or several brakes of the vehicle so as to endeavour to restrict the speed of the vehicle to a brake reference speed when the vehicle has been accelerated to a speed above the target speed.

According to the invention, this object is achieved by a method having the features defined in claim 1 and a cruise control system having the features defined in claim 10.

According to the invention:
- the target speed for the engine control means is set to a basic value that is adjustable by the driver of the vehicle; and
- the target speed is automatically and temporarily increased from the basic value to a modified value corresponding to a speed lower than the brake reference speed, when it is established that the following conditions are fulfilled:
   - the brake control means has been put in operation so as to control a braking operation by ordering a braking power for said one or several brakes, and
   - the braking power ordered by the brake control means during the present braking operation has dropped below a given threshold value.

The invention is based on the fact that the braking power ordered by the brake control means will be gradually reduced as the declivity of a downhill slope descended by the vehicle is reduced. The fact that the braking power has dropped during an ongoing braking operation below a given threshold value is in this case taken as an indication that the vehicle is approaching the end of a downhill slope, and the increase of the target speed from the basic value to the modified value will allow the vehicle to temporarily travel at a speed above the speed corresponding to the set basic value for the target speed after having leaved the downhill slope. The vehicle may benefit from this higher speed if it encounters an uphill slope before the target speed has been reset from the modified value to the basic value, since an additional speed when entering an uphill slope will reduce the time and fuel required for ascending the uphill slope. In this manner, the vehicle may take advantage of the acceleration of the vehicle due to gravity in a downhill slope when ascending an uphill slope following shortly after the downhill slope. This will create opportunities for improved fuel economy and a higher mean speed of the vehicle.

According to an embodiment of the invention, said modified value for the target speed is set to correspond:
- to a maximum speed, which corresponds to a speed at a given level below the brake reference speed, if the actual speed at which the vehicle was running when it was established that the braking power ordered by the brake control means had dropped below the threshold value is higher than this maximum speed; and
- to a speed essentially equal to the actual speed at which the vehicle was running when it was established that the braking power ordered by the brake control means had dropped below the threshold value, if this actual speed is lower than said maximum speed.

Hereby, the target speed will be prevented from being increased to close to the brake reference speed, which could cause conflicts between the engine control means and the brake control means.

Further advantageous features of the method and the cruise control system according to the invention are indicated in the dependent claims and the following description.

The invention also relates to a computer program having the features defined in claim 14, a computer program product having the features defined in claim 15 and an electronic control unit having the features defined in claim 16.

### BRIEF DESCRIPTION OF THE DRAWINGS

With reference to the appended drawings, a specific description of embodiments of the invention cited as examples follows below. In the drawings:
- Fig 1: is a schematic diagram of a combustion engine with an associated driveline, illustrating an embodiment of a cruise control system according to the present invention,
- Fig 2: is a schematic outline diagram of an electronic control unit for implementing a method according to the invention, and
- Fig 3: is a flow diagram illustrating a method according to an embodiment of the invention.

### MODES FOR CARRYING OUT THE INVENTION

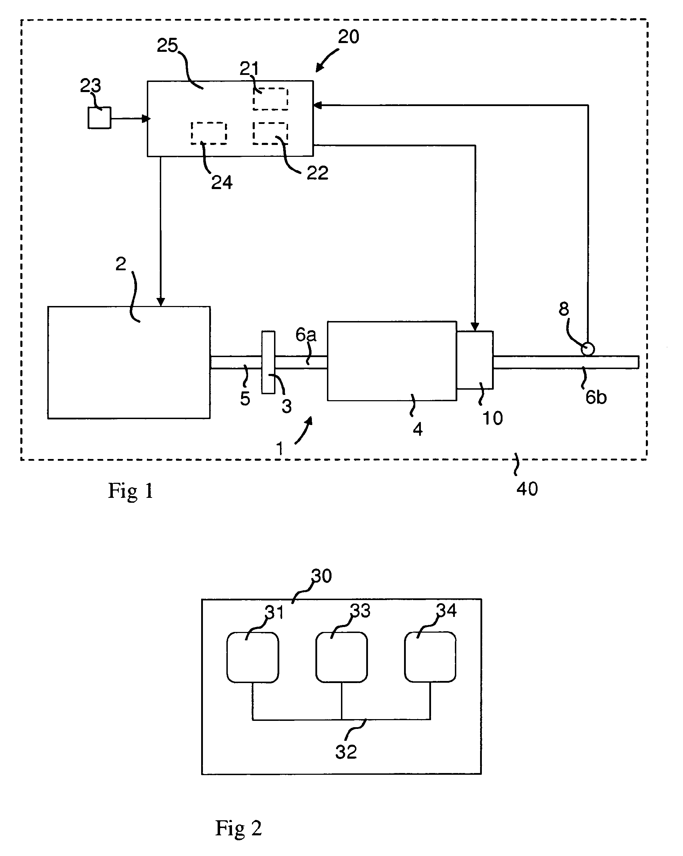

A part of a drive line 1 of a motor vehicle 40 is schematically illustrated in Fig 1. The drive line 1 comprises a vehicle engine 2, for instance in the form of a conventional combustion engine, which is connected to driving wheels (not shown) of the vehicle via a clutch 3 and a gearbox 4. The output shaft 5 of the engine 1 is connected to the input shaft 6a of the gearbox via said clutch 3, which is arranged to transfer the torque exerted by the engine to the input shaft 6a of the gearbox.

The vehicle is provided with a cruise control system 20, which comprises engine control means 21 adapted to automatically control the engine 2 in dependence on information as to a target speed Sₜ and the actual speed of the vehicle so as to endeavour to keep the speed of the vehicle essentially equal to the target speed Sₜ. The cruise control system 20 further comprises brake control means 22 adapted to automatically control one or several brakes of the vehicle so as to endeavour to restrict the speed of the vehicle to a brake reference speed S_{ref} when the vehicle descends a downhill slope and the vehicle has been accelerated under the effect of gravity to a speed above the target speed Sₜ. Thus, when the cruise control system operates with the engine control means 21 and the brake control means 22 enabled, i.e. with the engine control means and the brake control means in operational state, the target speed Sₜ constitutes a lower speed limit for the vehicle speed whereas the brake reference speed S_{ref} constitutes an upper speed limit for the vehicle speed. If the driving resistance of the vehicle is positive, the engine control means 21 controls the engine 2 so as to strive to keep the speed of the vehicle essentially equal to the target speed Sₜ. Thus, the engine control means 21 will increase the engine power when the speed of the vehicle falls below the target speed Sₜ and reduce the engine power when the speed of the vehicle increases above the target speed. If the driving resistance of the vehicle is negative, the brake control means 22 controls one or several brakes of the vehicle so as to strive to restrict the speed of the vehicle to the brake reference speed S_{ref}. Thus, the brake control means 22 will increase the braking power when the speed of the vehicle increases above the brake reference speed S_{ref} and reduce the braking power when the speed of the vehicle falls below the brake reference speed.

If the vehicle descends a downhill slope with the engine control means 21 and the brake control means 22 enabled, the brake control means 22 will initiate a braking operation so as to endeavour to restrict the speed of the vehicle to the brake reference speed S_{ref} when the vehicle under the effect of gravity has been accelerated to a speed above the target speed Sₜ and reached the brake reference speed S_{ref}.

The brake control means 22 may be adapted to control one or several auxiliary brakes of the vehicle, such as an engine brake and/or an exhaust brake and/or an electromagnetic retarder and/or a hydraulic retarder. In the illustrated example, the brake control means 22 is adapted to control an auxiliary brake 10 in the form of a retarder, which acts on the output shaft 6b of the gearbox 4.

The cruise control system 20 further comprises speed setting means 23, by means of which the driver of the vehicle may set the target speed Sₜ to a desired basic value V_{bas}. The speed setting means 23 may be configured to allow the driver to set the brake reference speed S_{ref} as a desired offset from the basic value V_{bas} for the target speed Sₜ. The speed setting means 23 may also be configured to allow the driver to directly set a desired value for the brake reference speed S_{ref}. It is realized that the brake reference speed S_{ref} always should be set higher than the target speed Sₜ in order to avoid conflicts between the engine control means 21 and the brake control means 22.

The inventive cruise control system 20 comprises processing means 24 adapted to automatically and temporarily increase the target speed Sₜ from the basic value V_{bas} to a modified value V_{mod} when it has established that the following conditions are fulfilled:
- the brake control means 22 has been put in operation so as to control a braking operation by ordering a braking power BP for said one or several brakes, and
- the braking power BP ordered by the brake control means 22 during the present braking operation has dropped below a given threshold value T_{BP.}

The threshold value T_{BP} may for instance be zero, in which case said increase of the target speed Sₜ is effectuated at the moment when an ongoing braking operation is ended and no braking power is ordered by the brake control means 22. The threshold value T_{BP} may alternatively be set to a value corresponding to a smaller braking power.

The processing means 24 is adapted to set said modified value V_{mod} to correspond to a speed lower than the brake reference speed S_{ref} in order to avoid conflicts between the engine control means 21 and the brake control means 22.

The processing means 24 may be adapted to establish the magnitude of said modified value V_{mod} in dependence on the actual speed at which the vehicle was running when it was established that the braking power BP ordered by the brake control means 22 had dropped below the threshold value T_{BP}. The modified value V_{mod} may for instance be set to correspond to a speed essentially equal to the actual speed at which the vehicle was running when it was established that the braking power ordered by the brake control means 22 had dropped below the threshold value T_{BP}.

In order to avoid conflicts between the engine control means 21 and the brake control means 22, the processing means 24 is with advantage adapted to set the modified value V_{mod} to correspond:
- to a maximum speed Sₘₐₓ, which corresponds to a speed at a given level below the brake reference speed S_{ref}, if the actual speed at which the vehicle was running when it was established that the braking power BP ordered by the brake control means 22 had dropped below the threshold value T_{BP} is higher than this maximum speed Sₘₐₓ; and
- to a speed essentially equal to the actual speed at which the vehicle was running when it was established that the braking power BP ordered by the brake control means 22 had dropped below the threshold value T_{BP,} if this actual speed is lower than said maximum speed Sₘₐₓ.
The maximum speed Sₘₐₓ is suitably about 1-2 km/h lower than the brake reference speed S_{ref}.

If the vehicle is provided with a top speed limiter adapted to prevent the vehicle engine 2 from accelerating the vehicle to a speed above a pre-set speed limit, this pre-set speed limit may with advantage constitute a maximum allowed value for said modified value V_{mod}.

After an increase of the target speed Sₜ from the basic value V_{bas} to the modified value V_{mod}, the processing means 24 may be adapted to reset the target speed Sₜ to the basic value V_{bas} when it is established that the following conditions are simultaneously fulfilled:
- the driving resistance of the vehicle is lower than a given driving resistance threshold value T_{dr1,} for instance corresponding to about 100 N, and
- the acceleration of the vehicle is higher than a given acceleration threshold value Tₐ, for instance corresponding to about 5 rpm/s.
Hereby, the target speed Sₜ will be reset to the basic value V_{bas} if the downhill slope descended by the vehicle is followed by a new steep downhill slope before the target speed Sₜ has been reset to the basic value V_{bas}. Other alternative conditions for a reset of the target speed Sₜ to the basic value V_{bas} may also be contemplated. The principal thing is that the target speed should be reset to the basic value V_{bas} when it is detected that the vehicle has entered a downhill slope of certain steepness.

When it is established that the driving resistance of the vehicle has been increased above a given driving resistance threshold value T_{dr2} (here denominated upper threshold value) after an increase of the target speed Sₜ to the modified value V_{mod}, the processing means 24 may be adapted to lower the target speed Sₜ from the modified value V_{mod} to a value essentially corresponding to the speed at which the vehicle was running when it was established that the driving resistance of the vehicle had been increased above this upper threshold value T_{dr2}. The magnitude of this upper threshold value T_{dr2} may depend on the prevailing total weight of the vehicle, i.e. the weight of the vehicle itself plus the weight of the load carried or towed by the vehicle. Hereby, the target speed Sₜ will be lowered from the modified value V_{mod} if the downhill slope descended by the vehicle is followed by a steep uphill slope before the target speed Sₜ has been reset to the basic value V_{bas}.

The driving resistance of the vehicle may be established by means of a suitable calculation model based on different parameters of the vehicle, such as engine load, engine rotational speed and vehicle speed, in a manner well-known to a person skilled in the art.

Furthermore, after an increase of the target speed Sₜ from the basic value V_{bas} to the modified value V_{mod,} the processing means 24 is suitably adapted to decrease the target speed Sₜ towards the basic value V_{bas} when a certain period of time has lapsed from the moment of said increase of the target speed Sₜ. This decrease of the target speed Sₜ from the modified value V_{mod} towards the basic value V_{bas} is with advantage performed gradually, for instance with steps of a given magnitude at certain time intervals. The magnitude of said steps may for instance be about 0.1 km/h and the time interval between each step may for instance be about 0.5 seconds. This decrease of the target speed Sₜ towards the basic value V_{bas} is interrupted when the target speed Sₜ has reached the basic value V_{bas}.

If the basic value V_{bas} for the target speed Sₜ is below a certain speed, for instance about 60 km/h, the target speed Sₜ is with advantage restricted to the basic value V_{bas}, which implies that no increase of the target speed Sₜ from the basic value V_{bas} to the modified value V_{mod} is allowed in this situation.

The engine control means 21, the brake control means 22 and the processing means 24 may be integrated in one and the same electronic control unit 25, as illustrated in Fig 1, but may alternatively be arranged in separate and mutually communicating electronic control units.

The actual speed of the vehicle, i.e. the prevailing speed at which the vehicle is running, may be measured or estimated in any suitable manner. The speed of the vehicle may for instance be estimated based on measuring values of the rotational speed of some part of the vehicle's drive shaft, such as the output shaft 6b of the gearbox 4. In the example illustrated in Fig 1, the actual vehicle speed is established by means of a measuring member 8 arranged to generate a value representing the rotational speed of the gearbox output shaft 6b. The cruise control system 20 is arranged to receive information from this measuring member 8.

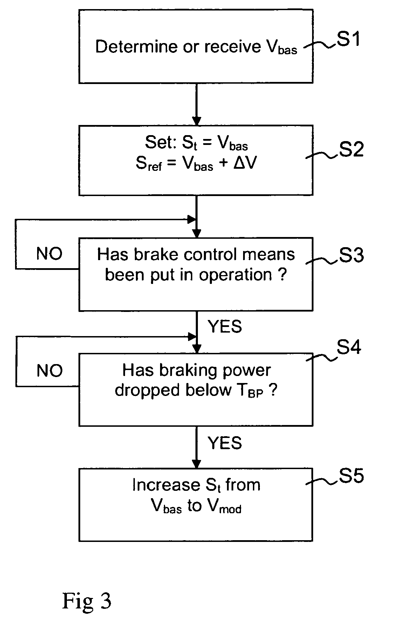

A flow diagram illustrating an embodiment of an inventive method for controlling the target speed Sₜ of a cruise control system 20 of a motor vehicle is shown in Fig 3. In a first step S1, a basic value V_{bas} for the target speed Sₜ is determined or received. In a second step S2, the target speed Sₜ is set to the basic value V_{bas} and the brake reference speed S_{ref} is set to a value corresponding to the basic value V_{bas} plus a given offset value ΔV. In a third step S3, it is established whether or not the brake control means 22 has been put in operation so as to control a braking operation by ordering a braking power BP for one or several brakes of the vehicle. If this is not the case, step S3 is repeated after a certain time interval. If this is the case, it is established in step S4 whether or not the braking power BP ordered by the brake control means 22 during the present braking operation has dropped below a given threshold value T_{BP}. If the braking power BP has not dropped below the threshold value T_{BP,} step S4 is repeated after a certain time interval. If it is indicated in step S4 that the braking power BP has dropped below the threshold value T_{BP,} the target speed Sₜ is increased from the basic value V_{bas} to the modified value V_{mod} in step S5.

Computer program code for implementing a method according to the invention is suitably included in a computer program, which is loadable into the internal memory of a computer, such as the internal memory of an electronic control unit of a motor vehicle. Such a computer program is suitably provided via a computer program product comprising a data storage medium readable by an electronic control unit, which data storage medium has the computer program stored thereon.

A computer program according to an embodiment of the invention comprises computer program code for causing a computer:
- to determine or receive a basic value V_{bas} for a target speed Sₜ and a value for a brake reference speed S_{ref};
- to determine or receive a value representing the actual speed of a vehicle;
- to control the engine of the vehicle in dependence on information as to the target speed Sₜ and the actual speed of the vehicle so as to endeavour to keep the speed of the vehicle essentially equal to the target speed Sₜ;
- to control one or several brakes of the vehicle in dependence on the brake reference speed S_{ref} and the actual speed of the vehicle so as to endeavour to restrict the speed of the vehicle to
the brake reference speed S_{ref} when the vehicle has been accelerated to a speed above the target speed Sₜ; and
- to automatically and temporarily increase said target speed Sₜ from the basic value V_{bas} to a modified value V_{mod}, which corresponds to a speed lower than the brake reference speed S_{ref}, when it is established that the following conditions are fulfilled:
   - a braking operation has been initiated by ordering a braking power BP for said one or several brakes, and
   - the braking power BP ordered during the present braking operation has dropped below a given threshold value T_{BP}.

Fig 2 very schematically illustrates an electronic control unit 30 comprising an execution means 31, such as a central processing unit (CPU), for executing computer software. The execution means 31 communicates with a memory 33, for instance of the type RAM, via a data bus 32. The control unit 30 also comprises data storage medium 34, for instance in the form of a hard disc, a Flash memory or a memory of the type ROM, PROM, EPROM or EEPROM. The execution means 31 communicates with the data storage medium 34 via the data bus 32. A computer program comprising computer program code for implementing a method according to the invention is stored on the data storage medium 34.

The invention is of course not in any way restricted to the embodiments described above. On the contrary, many possibilities to modifications thereof will be apparent to a person with ordinary skill in the art without departing from the basic idea of the invention as defined in the appended claims.

## Claims

1. A method for controlling the target speed of a cruise control system (20) of a motor vehicle, wherein the cruise control system comprises:
- engine control means (21) adapted to automatically control the engine of the vehicle in dependence on information as to the target speed and the actual speed of the vehicle so as to endeavour to keep the speed of the vehicle essentially equal to the target speed, the target speed being set to a basic value that is adjustable by the driver of the vehicle; and
- brake control means (22) adapted to automatically control one or several brakes of the vehicle so as to endeavour to restrict the speed of the vehicle to a brake reference speed when the vehicle has been accelerated to a speed above the target speed, the brake reference speed being set to a value higher than the basic value for the target speed,
**characterized in:**
- **that** the target speed is automatically and temporarily increased from the basic value to a modified value when it is established that the following conditions are fulfilled:
• the brake control means (22) has been put in operation so as to control a braking operation by ordering a braking power for said one or several brakes, and
• the braking power ordered by the brake control means (22) during the present braking operation has dropped below a given threshold value; and
- **that** said modified value is set to correspond to a speed lower than the brake reference speed.

2. A method according to claim 1, **characterized in that** the magnitude of said modified value is established in dependence on the actual speed at which the vehicle was running when it was established that the braking power ordered by the brake control means (22) had dropped below the threshold value.

3. A method according to claim 2, **characterized in that** said modified value is set to correspond to a speed essentially equal to the actual speed at which the vehicle was running when it was established that the braking power ordered by the brake control means (22) had dropped below the threshold value.

4. A method according to claim 2, **characterized in that** said modified value is set to correspond:
- to a maximum speed, which corresponds to a speed at a given level below the brake reference speed, if the actual speed at which the vehicle was running when it was established that the braking power ordered by the brake control means (22) had dropped below the threshold value is higher than this maximum speed; and
- to a speed essentially equal to the actual speed at which the vehicle was running when it was established that the braking power ordered by the brake control means (22) had dropped below the threshold value, if this actual speed is lower than said maximum speed.

5. A method according to any of claims 1-4, **characterized in that** the threshold value is zero.

6. A method according to any of claims 1-5, **characterized in that** the target speed, after an increase thereof to the modified value, is reset to the basic value when it is established that the following conditions are fulfilled:
- the driving resistance of the vehicle is lower than a given lower threshold value, and
- the acceleration of the vehicle is higher than a given acceleration threshold value.

7. A method according to any of claims 1-6, **characterized in that**, when it is established that the driving resistance of the vehicle has been increased above a given upper threshold value after an increase of the target speed to the modified value, the target speed is lowered from the modified value to a value essentially corresponding to the speed at which the vehicle was running when it was established that the driving resistance of the vehicle had been increased above this upper threshold value.

8. A method according to any of claims 1-7, **characterized in that** the target speed, after an increase thereof to the modified value, is decreased towards the basic value when a certain period of time has lapsed from the moment of said increase of the target speed.

9. A method according to claim 8, **characterized in that** said decrease of the target speed from the modified value towards the basic value is performed gradually.

10. A cruise control system for controlling the speed of a motor vehicle, wherein the cruise control system (20) comprises:
- engine control means (21) adapted to automatically control the engine in dependence on information as to a target speed and the actual speed of the vehicle so as to endeavour to keep the speed of the vehicle essentially equal to the target speed;
- speed setting means (23), by means of which the driver of the vehicle may set the target speed to a desired basic value; and
- brake control means (22) adapted to automatically control one or several brakes of the vehicle so as to endeavour to restrict the speed of the vehicle to a brake reference speed when the vehicle has been accelerated to a speed above the target speed, the brake reference speed being set to a value higher than the basic value for the target speed,
**characterized in:**
- **that** the cruise control system (20) comprises processing means (24) adapted to automatically and temporarily increase the target speed from the basic value to a modified value when it has established that the following conditions are fulfilled:
• the brake control means (22) has been put in operation so as to control a braking operation by ordering a braking power for said one or several brakes, and
• the braking power ordered by the brake control means (22) during the present braking operation has dropped below a given threshold value; and
- **that** the processing means (24) is adapted to set said modified value to correspond to a speed lower than the brake reference speed.

11. A cruise control system according to claim 10, **characterized in that** the processing means (24) is adapted to establish the magnitude of said modified value in dependence on the actual speed at which the vehicle was running when it was established that the braking power ordered by the brake control means (22) had dropped below the threshold value.

12. A cruise control system according to claim 11, **characterized in that** the processing means (24) is adapted to set said modified value to correspond to a speed essentially equal to the actual speed at which the vehicle was running when it was established that the braking power ordered by the brake control means (22) had dropped below the threshold value.

13. A cruise control system according to claim 11, **characterized in that** the processing means (24) is adapted to set said modified value to correspond:
- to a maximum speed, which corresponds to a speed at a given level below the brake reference speed, if the actual speed at which the vehicle was running when it was established that the braking power ordered by the brake control means (22) had dropped below the threshold value is higher than this maximum speed; and
- to a speed essentially equal to the actual speed at which the vehicle was running when it was established that the braking power ordered by the brake control means (22) had dropped below the threshold value, if this actual speed is lower than said maximum speed.

14. A computer program loadable into the internal memory of a computer in a motor vehicle, the computer program comprising computer program code for causing the computer:
- to determine or receive a basic value for a target speed and a value for a brake reference speed;
- to determine or receive a value representing the actual speed of the vehicle;
- to control the engine of the vehicle in dependence on information as to the target speed and the actual speed of the vehicle so as to endeavour to keep the speed of the vehicle essentially equal to the target speed;
- to control one or several brakes of the vehicle in dependence on the brake reference speed and the actual speed of the vehicle so as to endeavour to restrict the speed of the vehicle to the brake reference speed when the vehicle has been accelerated to a speed above the target speed; and
- to automatically and temporarily increase said target speed from the basic value to a modified value, which corresponds to a speed lower than the brake reference speed, when it is established that the following conditions are fulfilled:
• a braking operation has been initiated by ordering a braking power for said one or several brakes, and
• the braking power ordered during the present braking operation has dropped below a given threshold value.

15. A computer program product comprising a data storage medium readable by an electronic control unit (30), a computer program according to claim 14 being stored on said data storage medium.

16. An electronic control unit (30) comprising an execution means (31), a memory (33) connected to the execution means and a data storage medium (34) connected to the execution means, wherein a computer program according to claim 14 is stored on said data storage medium (34).

## Patentansprüche

1. Verfahren zum Steuern der Zielgeschwindigkeit eines Geschwindigkeitsregelungssystems (20) eines Kraftfahrzeugs, wobei das Geschwindigkeitsregelsystem aufweist:
- Motorsteuermittel (21), die dazu ausgebildet sind, automatisch den Motor des Fahrzeugs in Abhängigkeit von Informationen betreffend die Zielgeschwindigkeit und der Ist-Geschwindigkeit des Kraftfahrzeugs zu steuern, um die Geschwindigkeit des Fahrzeugs im Wesentlichen gleich der Zielgeschwindigkeit zu halten, wobei die Zielgeschwindigkeit als Basiswert gewählt wird, der durch einen Fahrer des Fahrzeugs anpassbar ist; und
- Bremssteuerungsmittel (22), die dazu ausgebildet sind, automatisch eine oder mehrere Bremsen des Fahrzeugs zu steuern, um die Geschwindigkeit des Fahrzeugs auf eine Bremsreferenzgeschwindigkeit zu begrenzen, wenn das Fahrzeug auf eine Geschwindigkeit oberhalb der Zielgeschwindigkeit beschleunigt hat, wobei die Bremsreferenzgeschwindigkeit auf einen höheren Wert gesetzt wird als der Basiswert der Zielgeschwindigkeit, **dadurch gekennzeichnet, dass**:
die Zielgeschwindigkeit automatisch und temporär von dem Basiswert auf einen modifizierten Wert erhöht wird, wenn festgestellt wird, dass die folgenden Bedingungen erfüllt sind:
- das Bremssteuermittel (22) betätigt wird, um einen Bremsvorgang durch Anfordern einer Bremskraft für eine oder mehrere Bremsen zu steuern, und
- die geforderte Bremskraft durch die Bremssteuermittel (22) während des gegenwärtigen Bremsvorgangs unterhalb eines vorbestimmten Grenzwert abgefallen ist; und
- der modifizierte Wert derart gewählt wird, dass er einer niedrigeren Geschwindigkeit als der Bremsreferenzgeschwindigkeit entspricht.

2. Verfahren nach Anspruch 1, **dadurch gekennzeichnet, dass** die Größe des modifizierten Werts in Abhängigkeit der Ist-Geschwindigkeit ermittelt wird, mit der sich das Fahrzeug bewegt hat, wenn ermittelt wird, dass die durch das Bremssteuermittel (22) angeforderte Bremskraft unterhalb des Grenzwerts abgefallen ist.

3. Verfahren nach Anspruch 2, **dadurch gekennzeichnet, dass** der modifizierte Wert derart gewählt wird, dass er einer Geschwindigkeit entspricht, die im Wesentlichen gleich der Ist-Geschwindigkeit ist, mit der sich das Fahrzeug bewegt hat, wenn festgestellt wird, dass die durch das Bremssteuermittel (22) angeforderte Bremskraft unterhalb des Grenzwerts abgefallen ist.

4. Verfahren nach Anspruch 2, **dadurch gekennzeichnet, dass** der modifizierte Wert derart gewählt wird, dass er:
- einer Maximalgeschwindigkeit entspricht, die einer Geschwindigkeit auf einem vorbestimmten Niveau unterhalb der Bremsreferenzgeschwindigkeit entspricht, falls die Ist-Geschwindigkeit, mit der sich das Fahrzeug bewegt hat, höher ist als die Maximalgeschwindigkeit, wenn festgestellt wird, dass die von dem Bremssteuermittel (22) angeforderte Bremskraft unterhalb des Grenzwerts abgefallen ist,; und
- einer Geschwindigkeit entspricht, die im Wesentlichen gleich der Ist-Geschwindigkeit ist, mit der sich das Fahrzeug bewegt hat, wenn ermittelt wird, dass die durch das Bremssteuermittel (22) angeforderte Bremskraft unterhalb des Grenzwerts abgefallen ist, falls die Ist-Geschwindigkeit niedriger als die Maximalgeschwindigkeit ist.

5. Verfahren nach einem der Ansprüche 1 bis 4, **dadurch gekennzeichnet, dass** der Grenzwert null ist.

6. Verfahren nach einem der Ansprüche 1 bis 5, **dadurch gekennzeichnet, dass** die Zielgeschwindigkeit nach ihrer Erhöhung auf den modifizierten Wert auf den Basiswert zurückgesetzt wird, falls festgestellt wird, dass die folgenden Bedingungen erfüllt sind:
- der Fahrwiderstand des Fahrzeugs niedriger als ein vorbestimmter unterer Grenzwert ist;
- die Beschleunigung des Fahrzeugs höher als ein vorbestimmter Beschleunigungsgrenzwert ist.

7. Verfahren nach einem der Ansprüche 1 bis 6, **dadurch gekennzeichnet, dass** falls ermittelt wird, dass sich der Fahrwiderstand des Fahrzeugs über einen vorbestimmten oberen Grenzwert nach dem Erhöhen der Zielgeschwindigkeit auf den modifizierten Wert erhöht hat, die Zielgeschwindigkeit von dem modifizierten Wert auf einen Wert verringert wird, der im Wesentlichen der Geschwindigkeit entspricht, mit der sich das Fahrzeug bewegt hat, wenn festgestellt wird, dass der Fahrwiderstand des Fahrzeugs sich über einen oberen Grenzwert erhöht hat.

8. Verfahren nach einem der Ansprüche 1 bis 7, **dadurch gekennzeichnet, dass** die Zielgeschwindigkeit nach ihrer Erhöhung auf den modifizierten Wert in Richtung des Basiswerts verringert wird, falls eine vorbestimmte Zeitspanne beginnend mit dem Moment der Erhöhung der Zielgeschwindigkeit abgelaufen ist.

9. Verfahren nach Anspruch 8, **dadurch gekennzeichnet, dass** die Verringerung der Zielgeschwindigkeit von dem modifizierten Wert in Richtung des Basiswerts graduell ausgeführt wird.

10. Geschwindigkeitssteuersystem zum Steuern der Geschwindigkeit eines Kraftfahrzeugs, wobei das Geschwindigkeitssteuersystem (20) aufweist:
- Motorsteuermittel (21), die dazu ausgebildet sind, den Motor in Abhängigkeit von Informationen betreffend einer Zielgeschwindigkeit und der Ist-Geschwindigkeit des Fahrzeugs automatisch zu steuern, um die Geschwindigkeit des Kraftfahrzeugs im Wesentlichen gleich der Zielgeschwindigkeit zu halten;
- Geschwindigkeitsfestlegungsmittel (23), mittels denen der Fahrer des Fahrzeugs eine Zielgeschwindigkeit auf einen gewünschten Basiswert setzen kann; und
- Bremssteuermittel (22), die dazu ausgebildet sind, eine oder mehrere Bremsen des Fahrzeugs automatisch zu steuern, um die Geschwindigkeit des Fahrzeugs auf eine Bremsreferenzgeschwindigkeit zu begrenzen, falls das Fahrzeug auf eine Geschwindigkeit oberhalb der Zielgeschwindigkeit beschleunigt hat, wobei der Bremsreferenzwert auf einen höheren Wert gesetzt wird als der Basiswert der Zielgeschwindigkeit, **dadurch gekennzeichnet, dass**:
- das Geschwindigkeitssteuersystem (20) ein Berechnungsmittel (24) aufweist, das dazu ausgebildet ist, automatisch und temporär die Zielgeschwindigkeit von dem Basiswert auf einen modifizierten Wert zu erhöhen, falls festgestellt wird, dass die folgenden Bedingungen erfüllt sind:
- die Bremssteuermittel (22) betätigt wird, um einen Bremsvorgang durch Anfordern einer Bremskraft für eine oder mehrere Bremsen zu steuern, und
- die von dem Bremssteuermittel (22) angeforderte Bremskraft während des gegenwärtigen Bremsvorgangs unterhalb eines vorbestimmten Grenzwerts abgefallen ist; und
- die Verarbeitungsmittel (24) dazu ausgebildet sind, den modifizierten Wert derart zu setzten, dass er einer Geschwindigkeit unterhalb der Bremsreferenzgeschwindigkeit entspricht.

11. Geschwindigkeitssteuerungssystem nach Anspruch 10, **dadurch gekennzeichnet, dass** das Berechnungsmittel (24) dazu ausgebildet ist, die Höhe des modifizierten Werts in Abhängigkeit der Ist-Geschwindigkeit zu ermitteln, mit der sich das Fahrzeug bewegt hat, wenn festgestellt wird, dass die von den Bremssteuermitteln (22) angeforderte Bremskraft unterhalb des Grenzwerts abgefallen ist.

12. Geschwindigkeitssteuerungssystem nach Anspruch 11, **dadurch gekennzeichnet, dass** die Berechnungsmittel (24) dazu ausgebildet sind, den modifizierten Wert derart zu setzen, dass er einer Geschwindigkeit entspricht, die im Wesentlichen gleich der Ist-Geschwindigkeit ist, mit der sich das Fahrzeug bewegt hat, wenn festgestellt wird, dass die von den Bremssteuerungsmitteln (22) angeforderte Bremskraft unterhalb des Grenzwerts abgefallen ist.

13. Geschwindigkeitssteuerungssystem nach Anspruch 11, **dadurch gekennzeichnet, dass** die Berechnungsmittel (24) ausgebildet sind, um den modifizierten Grenzwert derart zu setzen, dass er:
- einer Maximalgeschwindigkeit entspricht, die einer Geschwindigkeit auf einem Niveau unterhalb der Bremsreferenzgeschwindigkeit entspricht, falls die Ist-Geschwindigkeit, mit der sich das Fahrzeug bewegt hat, höher ist als die Maximalgeschwindigkeit, wenn festgestellt wird, dass die von dem Bremssteuerungsmittel (22) angeordnete Bremskraft unterhalb des Grenzwerts abgefallen ist; und
- einer Geschwindigkeit entspricht, die im Wesentlichen gleich der Ist-Geschwindigkeit ist, mit der sich das Fahrzeug bewegt hat, wenn festgestellt wird, dass die von dem Bremssteuerungsmittel (22) angeforderte Bremskraft unterhalb des Grenzwerts abgefallen ist, falls die Ist-Geschwindigkeit niedriger als die Maximalgeschwindigkeit ist.

14. Computerprogramm, das in einen internen Speicher eines Computers in einem Kraftfahrzeug ladbar ist, wobei das Computerprogramm einen Computerprogrammcode aufweist, um den Computer anzuweisen, einen Basiswert für eine Zielgeschwindigkeit und einen Wert für eine Referenzgeschwindigkeit zu ermitteln oder zu erhalten;
- einen die Ist-Geschwindigkeit des Fahrzeugs darstellenden Wert zu ermitteln oder zu erhalten;
- den Motor des Kraftfahrzeugs in Abhängigkeit von Informationen betreffend die Zielgeschwindigkeit und die Ist-Geschwindigkeit des Fahrzeugs zu steuern, um die Geschwindigkeit des Fahrzeugs im Wesentlichen gleich der Zielgeschwindigkeit zu halten;
- eine oder mehrere Bremsen des Fahrzeugs in Abhängigkeit der Bremsreferenzgeschwindigkeit und der Ist-Geschwindigkeit des Fahrzeugs zu steuern, um die Geschwindigkeit des Fahrzeugs auf die Bremsreferenzgeschwindigkeit zu begrenzen, falls das Fahrzeug auf eine Geschwindigkeit oberhalb der Zielgeschwindigkeit beschleunigt hat; und
- automatisch und temporär der Zielgeschwindigkeit von dem Basiswert auf einen modifizierten Wert zu erhöhen, der einer niedrigeren Geschwindigkeit als der Bremsreferenzgeschwindigkeit entspricht, wenn festgestellt wird, dass die folgenden Bedingungen erfüllt sind:
- ein Bremsvorgang durch Anfordern einer Bremskraft für eine oder mehrere Bremsen initiiert wird, und
- die während des gegenwärtigen Bremsvorgangs angeforderte Bremskraft unterhalb eines vorbestimmten Grenzwerts abgefallen ist.

15. Computerprogrammprodukt aufweisend ein durch eine elektronische Steuereinheit (30) lesbares Datenspeichermedium, wobei ein Computerprogramm nach Anspruch 14 auf dem Datenspeichermedium gespeichert ist.

16. Elektronische Speichereinheit (30),die ein Ausführungsmittel (31), einen mit dem Ausführungsmittel verbundenen Speicher (33) und ein mit dem Ausführungsmittel verbundenes Datenspeichermedium (34) aufweist, wobei ein Computerprogramm nach Anspruch 14 auf dem Datenspeichermedium (34) gespeichert ist.

## Revendications

1. Procédé de régulation de la vitesse cible d'un système de régulation de vitesse (20) d'un véhicule à moteur, le système de régulation de vitesse comprenant :
- des moyens de commande (21) du moteur, conçus pour commander automatiquement le moteur du véhicule en fonction d'informations relatives à la vitesse cible et à la vitesse réelle du véhicule pour tenter de maintenir la vitesse du véhicule sensiblement égale à la vitesse cible, la vitesse cible étant réglée à une valeur de base pouvant être ajustée par le conducteur du véhicule; et
- un moyen de commande de freins (22) conçu pour commander automatiquement un ou plusieurs freins du véhicule pour tenter de limiter la vitesse du véhicule à une vitesse de référence de freinage lorsque le véhicule a été accéléré à une vitesse supérieure à la vitesse cible, la vitesse de référence de freinage étant réglée à une valeur supérieure à la valeur de base de la vitesse cible,
**caractérisé :**
- **en ce que** la vitesse cible est automatiquement et temporairement augmentée de la valeur de base à une valeur modifiée lorsqu'il est établi que les conditions suivantes sont remplies :
• le moyen de commande de freins (22) a été activé de façon à commander une opération de freinage en ordonnant une puissance de freinage sur l'un ou plusieurs desdits freins, et
• la puissance de freinage ordonnée par le moyen de commande de freinage (22) pendant l'opération de freinage en cours est tombée en dessous d'une valeur seuil donnée; et
- **en ce que** ladite valeur modifiée est réglée de façon à correspondre à une vitesse inférieure à la vitesse de référence de freinage.

2. Procédé selon la revendication 1, **caractérisé en ce que** l'ordre de grandeur de ladite valeur modifiée est établi en fonction de la vitesse réelle à laquelle se déplaçait le véhicule lorsqu'il a été établi que la puissance de freinage ordonnée par le moyen de commande de freinage (22) était tombée en dessous de la valeur seuil.

3. Procédé selon la revendication 2, **caractérisé en ce que** ladite valeur modifiée est réglée de façon à correspondre à une vitesse sensiblement égale à la vitesse réelle à laquelle se déplaçait le véhicule lorsqu'il a été établi que la puissance de freinage ordonnée par le moyen de commande de freins (22) était tombée en dessous de la valeur seuil.

4. Procédé selon la revendication 2, **caractérisé en ce que** ladite valeur modifiée est réglée de façon à correspondre :
- à une vitesse maximum qui correspond à une vitesse située à un niveau donné inférieur à la vitesse de référence de freinage, si la vitesse réelle à laquelle se déplaçait le véhicule lorsqu'il a été établi que la puissance de freinage ordonnée par le moyen de commande de freins (22) était tombée en dessous de la valeur seuil, est supérieure à cette vitesse maximum; et
- à une vitesse sensiblement égale à la vitesse réelle à laquelle se déplaçait le véhicule lorsqu'il a été établi que la puissance de freinage ordonnée par le moyen de commande de freins (22) était tombée en dessous de la valeur seuil, si cette vitesse réelle est inférieure à ladite vitesse maximum.

5. Procédé selon l'une quelconque des revendications 1 à 4, **caractérisé en ce que** la valeur seuil est égale à zéro.

6. Procédé selon l'une quelconque des revendications 1 à 5, **caractérisé en ce que** la vitesse cible, après avoir été augmentée à la valeur modifiée, est remise à la valeur de base lorsqu'il est établi que les conditions suivantes sont remplies :
- la résistance de conduite du véhicule est inférieure à une valeur seuil inférieure donnée, et
- l'accélération du véhicule est supérieure à une valeur seuil d'accélération donnée.

7. Procédé selon l'une quelconque des revendications 1 à 6, **caractérisé en ce que**, lorsqu'il est établi que la résistance de conduite du véhicule a été augmentée au-delà d'une valeur seuil supérieure donnée après une augmentation de la vitesse cible à la valeur modifiée, la vitesse cible est abaissée de la valeur modifiée à une valeur correspondant sensiblement à la vitesse à laquelle se déplaçait le véhicule lorsqu'il a été établi que la résistance de conduite du véhicule avait été augmentée au-delà de cette valeur seuil supérieure.

8. Procédé selon l'une quelconque des revendications 1 à 7, **caractérisé en ce que** la vitesse cible, après avoir été augmentée à la valeur modifiée, est diminuée vers la valeur de base lorsqu'un certain laps de temps s'est écoulé à partir du moment de ladite augmentation de la vitesse cible.

9. Procédé selon la revendication 8, **caractérisé en ce que** ladite diminution de la vitesse cible de la valeur modifiée vers la valeur de base est opérée progressivement.

10. Système de régulation de vitesse destiné à réguler la vitesse d'un véhicule à moteur, le système de régulation de vitesse (20) comprenant:
- des moyens de commande (21) du moteur, conçus pour commander automatiquement le moteur en fonction d'informations relatives à la vitesse cible et à la vitesse réelle du véhicule pour tenter de maintenir la vitesse du véhicule sensiblement égale à la vitesse cible;
- des moyens de réglage de vitesse (23), permettant au conducteur du véhicule de régler la vitesse cible à une valeur de base désirée; et
- un moyen de commande de freins (22) conçu pour commander automatiquement un ou plusieurs freins du véhicule pour tenter de limiter la vitesse du véhicule à une vitesse de référence de freinage lorsque le véhicule a été accéléré à une vitesse supérieure à la vitesse cible, la vitesse de référence de freinage étant réglée à une valeur supérieure à la valeur de base de la vitesse cible,
**caractérisé :**
- **en ce que** le système de régulation de vitesse (20) comprend un moyen de traitement (24) conçu pour augmenter automatiquement et temporairement la vitesse cible de la valeur de base à une valeur modifiée, lorsqu'il a été établi que les conditions suivantes sont remplies :
• le moyen de commande des freins (22) a été activé de façon à commander une opération de freinage en ordonnant une puissance de freinage sur l'un ou plusieurs desdits freins, et
• la puissance de freinage ordonnée par le moyen de commande de freinage (22) pendant l'opération de freinage en cours est tombée en dessous d'une valeur seuil donnée; et
- **en ce que** le moyen de traitement (24) est conçu pour régler ladite valeur modifiée de façon qu'elle corresponde à une vitesse inférieure à la vitesse de référence de freinage.

11. Système de régulation de vitesse selon la revendication 10, **caractérisé en ce que** le moyen de traitement (24) est conçu pour établir l'ordre de grandeur de ladite valeur modifiée en fonction de la vitesse réelle à laquelle se déplaçait le véhicule lorsqu'il a été établi que la puissance de freinage ordonnée par le moyen de commande de freinage (22) était tombée en dessous de la valeur seuil.

12. Système de régulation de vitesse selon la revendication 11, **caractérisé en ce que** le moyen de traitement (24) est conçu pour régler ladite valeur modifiée de façon qu'elle corresponde à une vitesse sensiblement égale à la vitesse réelle à laquelle se déplaçait le véhicule lorsqu'il a été établi que la puissance de freinage ordonnée par le moyen de commande de freins (22) était tombée en dessous de la valeur seuil.

13. Système de régulation de vitesse selon la revendication 11, **caractérisé en ce que** le moyen de traitement (24) est conçu pour régler ladite valeur modifiée de façon qu'elle corresponde :
- à une vitesse maximum, qui correspond à une vitesse située à un niveau donné au-dessous de la vitesse de référence de freinage, si la vitesse réelle à laquelle se déplaçait le véhicule lorsqu'il a été établi que la puissance de freinage ordonnée par le moyen de commande de freins (22) était tombée en dessous de la valeur seuil, est supérieure à cette vitesse maximum; et
- à une vitesse sensiblement égale à la vitesse réelle à laquelle se déplaçait le véhicule lorsqu'il a été établi que la puissance de freinage ordonnée par le moyen de commande de freins (22) était tombée en dessous de la valeur seuil, si cette vitesse réelle est inférieure à ladite vitesse maximum.

14. Programme informatique chargeable dans la mémoire interne d'un ordinateur dans un véhicule à moteur, le programme informatique comprenant un code de programme informatique pour permettre à l'ordinateur de:
- déterminer ou recevoir une valeur de base d'une vitesse cible et une valeur d'une vitesse de référence de freinage;
- déterminer ou recevoir une valeur représentant la vitesse réelle du véhicule;
- commander le moteur du véhicule en fonction d'informations relatives à la vitesse cible et à la vitesse réelle du véhicule pour tenter de maintenir la vitesse du véhicule sensiblement égale à la vitesse cible;
- commander un ou plusieurs freins du véhicule en fonction de la vitesse de référence de freinage et de la vitesse réelle du véhicule pour tenter de limiter la vitesse du véhicule à la vitesse de référence de freinage lorsque le véhicule a été accéléré à une vitesse supérieure à la vitesse cible; et
- augmenter automatiquement et temporairement ladite vitesse cible de la valeur de base à une valeur modifiée, qui correspond à une vitesse inférieure à la vitesse de référence de freinage, lorsqu'il est établi que les conditions suivantes sont remplies :
• une opération de freinage a été initiée en ordonnant une puissance de freinage sur l'un ou plusieurs desdits freins, et
• la puissance de freinage ordonnée pendant l'opération de freinage en cours est tombée en dessous d'une valeur seuil donnée.

15. Produit de programme informatique comprenant un support de stockage de données exploitable par une unité de commande électronique (30), un programme informatique selon la revendication 14 étant stocké sur ledit support de stockage de données.

16. Unité de commande électronique (30) comprenant des moyens d'exécution (31), une mémoire (33) reliée aux moyens d'exécution et un support de stockage de données (34) relié aux moyens d'exécution, un programme informatique selon la revendication 14 étant stocké sur ledit support de stockage de données (34).
